# EUROPEAN PATENT SPECIFICATION

(11) **EP 0 769 232 B1**
(45) Date of publication and mention of the grant of the patent: **16.04.2003**
(21) Application number: 95923349.5
(22) Date of filing: 27.06.1995
(51) Int. Cl.: H04M 1/24, H04M 3/22

(54) **METHOD FOR SIGNALLING THE REASON FOR BREAK-OFF OF A CONNECTION TO A MAIN UNIT**
VERFAHREN ZUR SIGNALISIERUNG DER URSACHE EINER VERBINDUNGSUNTERBRECHUNG ZU EINER HAUPTEINHEIT
PROCEDE PERMETTANT DE SIGNALER LA RAISON D'UNE INTERRUPTION DE CONNEXION A UNE UNITE PRINCIPALE

(30) Priority: 01.07.1994 FI 943174
(43) Date of publication of application: 23.04.1997
(73) Proprietor: Nokia Corporation, 02150 Espoo (FI)
(72) Inventor: LAPPALAINEN, Pekka, FIN-00440 Helsinki (FI); MANTILO, Kari, FIN-01710 Vantaa (FI)
(74) Representative: Holmström, Stefan Mikael
(86) International application number: FI9500371
(87) International publication number: WO96001541

(56) References cited:
- EP-A- 0 547 329
- US-A- 3 979 741
- US-A- 4 595 972
- US-A- 5 291 545
- US-A- 5 422 939

## Description

The present invention relates to a method for signalling the reason for a break-off of a connection between a subscriber unit and a main unit to the main unit in a telecommunication system, the subscriber unit comprising a switching means which in the ON position forwards operating voltage to the subscriber unit, and which in the OFF position breaks off the supply of operating voltage to the subscriber unit; and an energy-storing device which is arranged to discharge and supply operating voltage to the subscriber unit when the operating voltage forwarded to the subscriber unit via the switching means falls below a predetermined limit. The invention also relates to a subscriber unit of a telecommunication system having a data transmission connection with a main unit of the telecommunication system, the subscriber unit comprising means for receiving telecommunication signals forwarded by the main unit and for transmitting telecommunication signals to the main unit; a power supply; a switching means which in the ON position is adapted to forward operating voltage to the subscriber unit, and which in the OFF position is adapted to break off the supply of operating voltage to the subscriber unit; and an energy-storing device which is arranged to discharge and supply operating voltage to the subscriber unit when the operating voltage forwarded to the subscriber unit by the switching means falls below a predetermined limit.

In this connection, the telecommunication system refers to a computer network, a telephone network, a radio network or the like system in which the different components of the system have a data transmission connection with each other by means of a trunk circuit or via the radio path. In order to ensure the quality of the data transmission connection, it is most important to detect fault situations of different components as fast as possible. In this case, modems, data circuit-terminating equipments and other subscriber units are in a special position as far as supervision is concerned, since they are often positioned at the end user's location, they get their supply of electricity there and are subject to the operation of the end user.

In a previously known telecommunication system subscriber units use a voltage source which can supply current and a signal notifying of a break-off of electricity even a moment after a power failure. Then the subscriber unit transmits a signal to the main unit of the system by which it informs that it is a question of a power failure. The main unit can thus distinguish between a line failure and a power failure.

However, a drawback of the above-mentioned known arrangement is that the main unit cannot distinguish between a situation in which a power failure is caused by an actual power failure and a situation in which a power failure is caused by the user having switched off the subscriber unit by pressing an electric switch. At the main unit end these situations appear to be alike, due to which the main unit will unnecessarily send an alarm to the operator in a situation which does not in fact concern a fault at all.

The object of the present invention is to solve the above-mentioned problem and provide a method by means of which the reason for a break-off of a connection can be signalled from a subscriber unit to a main unit in a more detailed way than previously, so that the main unit will not unnecessarily alarm the operator. This object is achieved by the method of the invention which is characterized in that the position of the switching means and the level of the operating voltage forwarded via the switching means to the subscriber unit are supervised, and when said operating voltage falls below a predetermined level, a first alarm signal is transmitted to the main unit if the switch is in the OFF position, and a second alarm signal is transmitted to the main unit if the switch is in the ON position.

The invention further relates to a subscriber unit with which the method of the invention can be applied. The subscriber unit of the invention is characterized in that the subscriber unit comprises a signal generator responsive to the position of the switching means, which generator is arranged to generate a first alarm signal when the operating voltage forwarded by the switching means to the subscriber unit falls below a predetermined limit if the switching means is in the OFF position, and which generator is arranged to generate a second alarm signal when the operating voltage forwarded by the switching means to the subscriber unit falls below a predetermined limit if the switching means is in the ON position; and means for forwarding the first and second alarm signal to the main unit of the telecommunication system.

The invention is based on the idea that when the electric switch of the subscriber unit is supervised electromechanically, the switching off of the subscriber unit by the user can be distinguished from a power failure, whereby the first alarm signal is transmitted to the main unit in a situation in which the electric switch is in the OFF position as the subscriber unit is losing electricity, and the second alarm signal in a situation in which the electric switch is in the ON position as the subscriber unit is losing electricity. Consequently, the main unit can make a distinction between situations in which the connection is broken off:
- by the user so that the main unit will receive the first alarm signal before the connection is broken off;
- due to a power failure so that the main unit will receive the second alarm signal before the connection is broken off;
- due to a line failure, whereby the main unit will not receive either the first or the second alarm signal before the break-off but the connection is "abruptly" broken off.

The most significant advantages of the method and the subscriber unit of the invention are thus that the reason for a break-off of a connection between a subscriber unit and a main unit can be signalled in detail to the main unit, and that the main unit will not unnecessarily alarm the operator.

One preferred embodiment of the subscriber unit according to the invention utilizes a transformer known per se for storing energy. This transformer comprises means for generating a predetermined signal when the voltage of its primary winding falls below a predetermined level. In this case, the secondary winding of said transformer can supply operating voltage to the subscriber unit a sufficiently long time so that the signal generator can transmit, depending on the position of the switching means, the first or the second alarm signal to the main unit. The most significant advantage of the embodiment of the invention is that it is inexpensive and uncomplicated.

The preferred embodiments of the subscriber unit of the invention are disclosed in the appended dependent claims 3 to 5. In the following, the invention will be explained in more detail by means of a few preferred embodiments of the invention with reference to the accompanying figures, of which
Figure 1 shows a first preferred embodiment of the subscriber unit according to the invention, and
Figure 2 shows a second preferred embodiment of the subscriber unit according to the invention.

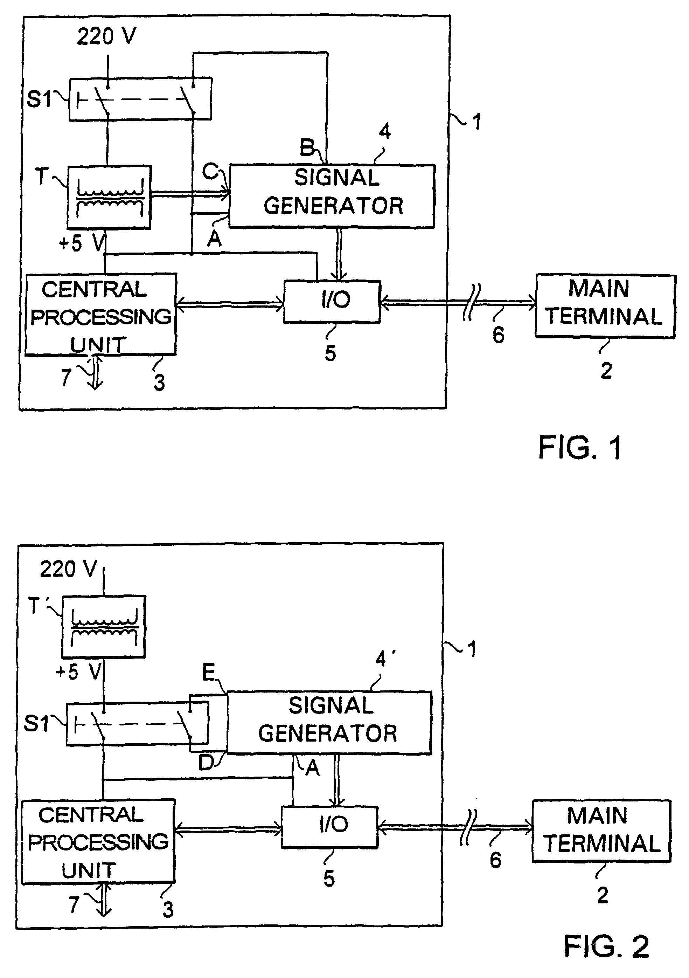

Figure 1 shows a first preferred embodiment of the subscriber unit according to the invention. In Figure 1 the subscriber unit is switched off, that is, its on-off switch S1 is in the OFF position. A subscriber unit 1 shown in Figure 1 is a terminal of a telecommunication system, such as a computer network, telephone network or a radio system and it is positioned at the user's location and has a data transmission connection with other parts of the system. The subscriber unit 1 in Figure 1 has a data transmission connection with a main terminal 2 via a connection cable 6.

Figure 1 indicates that the on-off switch S1 comprises two separate circuits that shift between the ON and OFF positions at the same time as the user presses the switch S1 manually. The operating voltage (220 V, for example) is supplied via the first circuit to a transformer T of the subscriber unit 1. The transformer T transforms and rectifies the operating voltage, whereby it supplies 5 V of direct voltage, for example, from its output to the other parts of the subscriber unit 1. In the case of Figure 1 these other parts, which receive operating voltage from the transformer T, comprise a central processing unit 3, a signal generator 4 (via an interface A) and an I/O unit 5 (Input/Output) through which the subscriber unit is connected to the connecting cable 6. Peripheral devices (such as a visual display terminal, a keyboard, etc.) included in the subscriber unit 1 are connected to the central processing unit 3 by means of a bus 7. The output of the transformer T is connected via the second circuit of the on-off switch S1 to an interface B of the signal generator 4. Hence, the signal generator 4 supervises the position of the switch S1 electromechanically.

During normal use of the subscriber unit 1, the switch S1 is in the ON position (not shown in Figure 1), wherein current is flowing through both of its circuits. In that case, the I/O unit 5 is responsive to the central processing unit 3 in a way that it forwards signals between the central processing unit 3 and the main terminal 2. The signal generator 4 is then in a passive state, that is, it does not generate or forward signals. Said passive state continues until the transformer T supplies a predetermined signal to an input C of the signal generator. Said signal notifies the signal generator 4 that the primary winding of the transformer T is losing operating voltage.

When a user switches off the terminal 1 by shifting the switch S1 to the OFF position, the signal generator 4 detects this in a way that the transformer supplies a predetermined amount of signals to its input C at the same time as the voltage signal is lost at the interface B. The transformer T can, however, supply operating voltage to the interface A of the signal generator and to the I/O unit 5 some time still (at least for a period of a few milliseconds) after losing operating voltage (220 V). The signal generator 4 is thus able to generate the first alarm signal and transmit it via the I/O unit 5 to the main terminal 2. The I/O unit stops forwarding signals from the central processing unit 3 to the main terminal in response to the first alarm signal. The main terminal 2 continually monitors the signals supplied to it, due to which it immediately detects and identifies the first alarm signal. The main terminal 2 (and the operator) is thus notified that the break-off of the connection to the subscriber unit 1 is caused by the user having switched off the subscriber unit 1 by means of the on-off switch S1.

On the other hand, when the current is broken off because of a power failure, the signal generator 4 detects this in a way that the transformer T supplies a predetermined signal to its input C at the same time as a voltage signal of 5 V is still supplied to its input B. Even in this case, the transformer T is able to supply the operating voltage to the interface A of the signal generator and to the I/O unit 5 some time still (at least for a period of a few milliseconds) after losing operating voltage (220 V). The signal generator 4 is thus able to generate the second alarm signal and transmit it via the I/O unit 5 to the main terminal 2. The I/O unit stops forwarding signals from the central processing unit 3 to the main terminal in response to the second alarm signal. The main terminal 2 continually monitors the signals to be supplied to it, due to which it immediately detects and identifies the second alarm signal. The main terminal 2 (and the operator) is thus notified that the break-off of the connection to the subscriber unit 1 is caused by a power failure.

If the main terminal 2 detects that the connection to the subscriber unit 1 is broken off without the main terminal 2 having received the first or the second alarm signal, it means that the connection is broken off due to a line failure or a like disturbance. In this case, the main terminal generates an alarm to the operator's terminal.

The first and second alarm signals generated by the signal generator preferably consists of bit sequences with at least 64 bits. When using shorter bit sequences than these, it is possible that the exchange terminal will not have time to identify the first or the second alarm signal. Said bit sequence is in one case preferably scrambled 1 and in the other case scrambled 0. The signal generator 4 (or the I/O unit 5) thus comprises preferably a scrambler in which the polynomial can be 1+X⁻¹+X⁻⁷, for example. Hence, the main terminal 2 comprises a corresponding descrambler.

Figure 2 shows a second preferred embodiment of the subscriber unit according to the invention. The subscriber unit shown in Figure 2 is both by its structure and its operation to a great degree identical to the subscriber unit shown in Figure 1. In the subscriber unit of Figure 2, the switch S1 is arranged after a transformer T'. The output of the transformer T' is thus switched to the first circuit of the switch S1, whereby the voltage to be supplied to the switch is 5 V. The poles of the second circuit of the switch S1 are also switched in a different way to the case of Figure 1, that is, to interfaces D and E of a signal generator 4'.

In the embodiment of Figure 2, the transformer T' does not supply the predetermined signal explained in connection with Figure 1, as an indication that it is losing operating voltage. On the other hand, a device measuring operating voltage and a device storing energy are integrated to the signal generator 4', the device preferably being a winding, a capacitor, a battery or the like which is charged during the use of the subscriber unit 1. Depending on the necessary amount of energy, an energy-storing device can naturally also be accomplished by means of the signal generator 4' as a separate unit. When operating voltage is after this switched off at the subscriber unit, the signal generator 4' detects that the operating voltage is declining, whereby the energy-storing device discharges in a way that it supplies operating voltage to the signal generator 4' and the I/O unit 5 a sufficiently long time so that the signal generator has time to generate and transmit the first or the second alarm signal to the main terminal.

When the user switches off the subscriber unit 1 of Figure 2 with the switch S1 by shifting it to the OFF position, the signal generator 4' detects the change in the position of the switch S1 in a way that the galvanic contact between the interfaces D and E is broken off when the secondary winding of the switch S1 opens at the same time as it loses the operating voltage supplied to its interface A. Then the energy-storing device (capacitor) in the signal generator starts to discharge, whereby it supplies operating current to the signal generator and to the I/O unit a sufficiently long time so that the first alarm signal generated by the signal generator 4' can be transmitted to the main terminal 2.

In case of a power failure, the signal generator 4' notices that it is losing the operating voltage supplied to its interface A. In that case, the galvanic contact between the interfaces D and E is retained because the switch S1 is still in the ON position. Therefore, the signal generator 4' perceives that it is a question of a power failure. Then the energy-storing device in the signal generator starts to discharge, whereby it supplies operating voltage to the signal generator and to the I/O unit a sufficiently long time so that the second alarm signal generated by the signal generator 4' can be transmitted to the main terminal 2.

It is to be understood that the above specification and the figures related to it are only meant to illustrate the present invention. The different variations and modifications of the invention will be evident to those skilled in the art without deviating from the scope of the invention presented in the appended claims.

## Claims

1. A method for signalling the reason for a break-off of a connection between a subscriber unit (1) and a main unit (2) to the main unit (2) in a telecommunication system, the subscriber unit (1) comprising
a switching means (S1) which in the ON position forwards operating voltage to the subscriber unit (1), and which in the OFF position breaks off the supply of operating voltage to the subscriber unit (1); and
an energy-storing device (T, 4') which is arranged to discharge and supply operating voltage to the subscriber unit (1) when the operating voltage forwarded to the subscriber unit (1) via the switching means (S1 falls below a predetermined limit, **characterized in that**
the position of the switching means (S1) and the level of the operating voltage forwarded via the switching means to the subscriber unit (1) are supervised, and when said operating voltage falls below a predetermined level, a first alarm signal is transmitted to the main unit (2) if the switch (S1) is in the OFF position, and a second alarm signal is transmitted to the main unit (2) if the switch (S1) is in the ON position.

2. A subscriber unit (1) of a telecommunication system having a data transmission connection with a main unit (2) of the telecommunication system, the subscriber unit (1) comprising
means (3, 5) for receiving telecommunication signals forwarded by the main unit (2) and for transmitting telecommunication signals to the main unit (2);
a power supply (T, T') ;
a switching means (S1) which in the ON position is adapted to forward operating voltage to the subscriber unit (1), and which in the OFF position is adapted to break off the supply of operating voltage to the subscriber unit (1); and
an energy-storing device (T, 4') which is arranged to discharge and supply operating voltage to the subscriber unit (1) when the operating voltage forwarded to the subscriber unit (1) by the switching means falls below a predetermined limit, **characterized in that** the subscriber unit comprises
a signal generator (4, 4') responsive to the position of the switching means (S1), which generator is arranged to generate a first alarm signal when the operating voltage forwarded by the switching means to the subscriber unit (1) falls below a predetermined limit if the switching means (S1 is in the OFF position, and which generator is arranged to generate a second alarm signal when the operating voltage forwarded by the switching means (S1) to the subscriber unit (1) falls below a predetermined limit if the switching means (S1) is in the ON position; and
means (5,6) for forwarding the first and second alarm signal to the main unit (2) of the telecommunication system.

3. A subscriber unit according to claim 2, **characterized in that** the first and second alarm signals consist of predetermined bit sequences, whereby the subscriber unit (1) comprises means (4, 4') for scrambling said bit sequences before transmitting them to the main unit (2).

4. A subscriber unit according to claim 2 or 3, **characterized in that** said energy-storing device is a winding, a capacitor, a battery or the like arranged in connection with the signal generator (4'), whereby the signal generator (4') is arranged to generate the first or the second alarm signal when the operating voltage forwarded to the subscriber unit (1) by the switching means (S1) falls below a predetermined limit and the energy-storing device starts to discharge.

5. A subscriber unit according to claim 2 or 3, **characterized in that** the power supply (T) is a transformer and said energy-storing device is a secondary winding of the transformer, whereby the transformer comprises means for generating and supplying a predetermined signal to an input (C) of the signal generator (4) when the operating voltage of a primary winding of the transformer falls below a predetermined limit, whereby the signal generator (4) is arranged to generate the first or the second alarm signal in response to said predetermined signal.

## Patentansprüche

1. Verfahren zur Signalisierung des Grundes einer Unterbrechung einer Verbindung zwischen einer Teilnehmereinheit (1) und einer Haupteinheit (2) zu der Haupteinheit (2) in einem Telekommunikationssystem, wobei die Teilnehmereinheit (1) aufweist:
eine Schalteinrichtung (S1), die in der eingeschalteten Position eine Betriebsspannung an die Teilnehmereinheit (1) anlegt, und die in der ausgeschalteten Position das Anlegen der Betriebsspannung an die Teilnehmereinheit (1) unterbricht, und
eine Energiespeichervorrichtung (T, 4'), die zum Entladen und zum Anlegen der Betriebsspannung an die Teilnehmereinheit (1) eingerichtet ist, wenn die zu der Teilnehmereinheit (1) über die Schalteinrichtung (S1) weitergeleitete Betriebsspannung unter einer vorbestimmten Grenze fällt,
**dadurch gekennzeichnet, dass**
die Position der Schalteinrichtung (S1) und der Pegel der zu der Teilnehmereinheit (1) über die Schalteinrichtung weitergeleitete Betriebsspannung überwacht werden, und, wenn die Betriebsspannung unter einem vorbestimmten Pegel fällt, ein erstes Warnsignal zu der Haupteinheit (2) gesendet wird, falls der Schalter (S1) sich in der ausgeschalteten Position befindet, und ein zweites Warnsignal zu der Haupteinheit (2) gesendet wird, falls der Schalter (S1) sich in der eingeschalteten Position befindet.

2. Teilnehmereinheit (1) eines Telekommunikationssystem, das eine Datenübertragungsverbindung mit einer Haupteinheit (2) des Telekommunikationssystems aufweist, wobei die Teilnehmereinheit (1) aufweist:
Einrichtungen (3, 5) zum Empfang von aus der Haupteinheit (2) weitergeleiteten Signalen und zur Übertragung von Telekommunikationssignalen zu der Haupteinheit (2),
eine Energieversorgung (T, T'),
eine Schalteinrichtung (S1), die in der eingeschalteten Position eingerichtet ist, eine Betriebsspannung an die Teilnehmereinheit (1 anzulegen, und die in der ausgeschalteten Position eingerichtet ist, das Anlegen der Betriebsspannung an die Teilnehmereinheit (1) zu unterbrechen, und
eine Energiespeichervorrichtung (T, 4'), die zum Entladen und zum Anlegen der Betriebsspannung an die Teilnehmereinheit (1) eingerichtet ist, wenn die zu der Teilnehmereinheit (1) über die Schalteinrichtung (S1) weitergeleitete Betriebsspannung unter einer vorbestimmten Grenze fällt,
**dadurch gekennzeichnet, dass** die Teilnehmereinheit aufweist
eine Signalerzeugungseinrichtung (4, 4'), die auf die Position der Schalteinrichtung (S1) anspricht, wobei die Erzeugungseinrichtung eingerichtet ist, ein erstes Warnsignal zu erzeugen, wenn die von der Schalteinrichtung zu der Teilnehmereinheit (1) weitergeleitete Betriebsspannung unter eine vorbestimmte Grenze fällt, falls die Schalteinrichtung (S1) sich in der ausgeschalteten Position befindet, und die Erzeugungseinrichtung eingerichtet ist, ein zweites Warnsignal zu erzeugen, wenn die durch die Schalteinrichtung (S1) zu der Teilnehmereinheit (1) weitergeleitete Betriebsspannung unter eine vorbestimmte Grenze fällt, falls die Schalteinrichtung (S1) sich in der eingeschalteten Position befindet, und
eine Einrichtung (5, 6) zur Weiterleitung des ersten Warnsignals und des zweiten Warnsignals zu der Haupteinheit (2) des Telekommunikationssystems.

3. Teilnehmereinheit nach Anspruch 2, **dadurch gekennzeichnet, dass** das erste Warnsignal und das zweite Warnsignal aus einer vorbestimmten Bitsequenz bestehen, wobei die Teilnehmereinheit (1) Einrichtungen (4, 4') zur Verwürfelung der Bitsequenzen vor deren Übertragung zu der Haupteinheit (2).

4. Teilnehmereinheit nach Anspruch 2 oder 3, **dadurch gekennzeichnet, dass** die Energiespeichervorrichtung eine Wicklung, ein Kondensator, eine Batterie oder dergleichen ist, die in Verbindung mit der Signalerzeugungseinrichtung (4') eingerichtet ist, wobei die Signalerzeugungseinrichtung (4') eingerichtet ist, das erste Warnsignal oder das zweite Warnsignal zu erzeugen, wenn die durch die Schalteinrichtung (S1) zu der Teilnehmereinheit (1) weitergeleitete Betriebsspannung unter eine vorbestimmte Grenze fällt und die Energiespeichervorrichtung zu entladen beginnt.

5. Teilnehmereinheit nach Anspruch 2 oder 3, **dadurch gekennzeichnet, dass** die Energieversorgung (T) ein Transformator ist und die Energiespeichervorrichtung eine Sekundärwicklung des Transformators ist, wobei der Transformator eine Einrichtung zur Erzeugung und Zufuhr eines vorbestimmten Signals an einen Eingang (C) der Signalerzeugungseinrichtung (4) aufweist, wenn die Betriebsspannung einer Primärwicklung des Transformators unter eine vorbestimmte Grenze fällt, wobei die Signalerzeugungseinrichtung (4) eingerichtet ist, das erste Warnsignal oder das zweite Warnsignal im Ansprechen auf das vorbestimmte Signal zu erzeugen.

## Revendications

1. Procédé permettant de signaler la raison d'une interruption d'une liaison entre une unité d'abonné (1) et une unité centrale (2) à l'unité centrale (2) dans un système de télécommunication, l'unité d'abonné (1) comprenant
des moyens de commutation (S1) qui dans la position ON transmettent la tension de fonctionnement à l'unité d'abonné (1), et qui dans la position OFF interrompent l'alimentation en tension de fonctionnement à l'unité d'abonné (1); et
un dispositif de stockage d'énergie (T, 4 ') qui est conçu pour interrompre et assurer la tension de fonctionnement à l'unité d'abonné (1) quand la tension de fonctionnement adressée à l'unité d'abonné (1) par l'intermédiaire des moyens de commutation (S1) descend en-dessous d'une limite prédéterminée, **caractérisé en ce que**
la position des moyens de commutation (S1) et le niveau de la tension de fonctionnement transmis par l'intermédiaire des moyens de commutation à l'unité d'abonné (1) sont supervisés, et quand ladite tension de fonctionnement descend en-dessous d'un niveau prédéterminé, un premier signal d'alarme est transmis à l'unité centrale (2) si les moyens de commutation (S1) sont dans la position OFF, et un deuxième signal d'alarme est transmis à l'unité centrale (2) si les moyens de commutation (S1) sont dans la position ON.

2. Unité d'abonné (1) d'un système de télécommunication ayant une liaison de transmission de données avec une unité centrale (2) du système de télécommunication, l'unité d'abonné (1) comprenant
des moyens (3, 5) pour recevoir des signaux de télécommunication transmis par l'unité centrale (2) et pour transmettre des signaux de télécommunication à l'unité centrale (2);
une alimentation (T, T ');
des moyens de commutation (S1) qui dans la position ON sont adaptés à transmettre la tension de fonctionnement à l'unité d'abonné (1), et qui dans la position OFF sont adaptés pour interrompre l'alimentation en tension de fonctionnement à l'unité d'abonné (1); et
un dispositif de stockage d'énergie (T, 4 ') qui est conçu pour interrompre et assurer la tension de fonctionnement à l'unité d'abonné (1) quand la tension de fonctionnement transmise à l'unité d'abonné (1) par les moyens de commutation tombe en-dessous d'une limite prédéterminée, **caractérisée en ce qu'**elle comprend
un générateur de signaux (4, 4 ') sensible à la position des moyens de commutation (S1), lequel générateur est conçu pour délivrer un premier signal d'alarme quand la tension de fonctionnement transmise par les moyens de commutation à l'unité d'abonné (1) tombe en-dessous d'une limite prédéterminée si les moyens de commutation (S1) sont dans la position OFF et lequel générateur est conçu pour délivrer un deuxième signal d'alarme quand la tension de fonctionnement transmise par les moyens de commutation (S1) à l'unité d'abonné (1) tombe en-dessous d'une limite prédéterminée si les moyens de commutation (S1) sont dans la position ON; et
des moyens (5, 6) pour transmettre le premier et le deuxième signal d'alarme à l'unité centrale (2) du système de télécommunication.

3. Unité d'abonné selon la revendication 2,
**caractérisée en ce que** les premier et deuxième signaux d'alarme consistent en des séquences binaires prédéterminées, grâce auxquelles l'unité d'abonné (1) comprend des moyens (4, 4 ') pour brouiller lesdites séquences binaires avant de les transmettre à l'unité centrale (2).

4. Unité d'abonné selon la revendication 2 ou 3, **caractérisée en ce que** ledit dispositif de stockage d'énergie est un bobinage, un condensateur, une batterie ou analogue conçu en relation avec le générateur de signaux (4 '), grâce auquel le générateur de signaux (4') est conçu pour délivrer le premier ou le deuxième signal d'alarme quand la tension de fonctionnement transmise à l'unité d'abonné (1) par les moyens de commutation (S1) tombe en-dessous d'une limite prédéterminée et le dispositif de stockage d'énergie commence à interrompre.

5. Unité d'abonné selon la revendication 2 ou 3, **caractérisé en ce que** l'alimentation (T) est un transformateur et le dispositif de stockage d'énergie est un bobinage secondaire du transformateur, grâce auquel le transformateur comprend des moyens de générer et de fournir un signal prédéterminé à une entrée (C) du générateur de signaux (4) quand la tension de fonctionnement d'un bobinage primaire du transformateur tombe en-dessous d'une limite prédéterminée, grâce auquel le générateur de signaux (4) est conçu pour délivrer le premier ou le deuxième signal d'alarme en réponse audit signal prédéterminé.
